# EUROPEAN PATENT SPECIFICATION

(11) **EP 2 154 164 B1**
(45) Date of publication and mention of the grant of the patent: **30.04.2014**
(21) Application number: 08752728.9
(22) Date of filing: 14.05.2008
(51) Int. Cl.: C08F 220/22, C09K 3/18, C08F 220/24

(54) **WATER-REPELLENT OIL-REPELLENT ANTIFOULING AGENT HAVING GOOD SOLUBILITY IN SOLVENT**
WASSER- UND ÖLABWEISENDES ANTIFOULINGMITTEL MIT GUTER LÖSLICHKEIT IN LÖSUNGSMITTEL
AGENT ANTI-TACHE HYDROPHOBE ET OLÉOPHOBE QUI PRÉSENTE UNE BONNE SOLUBILITÉ DANS DES SOLVANTS

(30) Priority: 15.05.2007 JP 2007128854
(43) Date of publication of application: 17.02.2010
(60) Divisional application: 13169465.5
(73) Proprietor: Daikin Industries, Ltd., Osaka 530-8323 (JP)
(72) Inventor: UEDA, Akihiko, Settsu-shi Osaka 566-8585 (JP); MAEDA, Masahiko, Settsu-shi Osaka 566-8585 (JP); MASUTANI, Tetsuya, Settsu-shi Osaka 566-8585 (JP)
(74) Representative: HOFFMANN EITLE
(86) International application number: PCT/JP2008/058857
(87) International publication number: WO 2008/143093

(56) References cited:
- EP-A1- 1 225 187
- EP-A2- 0 561 708
- WO-A1-03/018508
- WO-A1-2004/041880
- WO-A1-2005/097850
- JP-A- 05 017 538
- JP-A- 2003 306 391
- DATABASE WPI Section Ch, Week 199706 Thomson Scientific, London, GB; Class A14, AN 1997-062011 XP002585251 & JP 08 311367 A (TOYO INK MFG CO LTD) 26 November 1996 (1996-11-26)
- DATABASE WPI Section Ch, Week 199309 Thomson Scientific, London, GB; Class A14, AN 1993-071153 XP002585252 & JP 05 017538 A (HOECHST GOSEI KK) 26 January 1993 (1993-01-26)

## Description

### TECHNICAL FIELD

The present invention relates to a fluorine-containing polymer for water-repellent oil-repellent antifouling agent having good solubility in solvent, particularly a fluorine-containing polymer for treating a masonry, a treatment agent, a treatment method and a treated substrate, which polymer has an excellent effect for treating a masonry.

### BACKGROUND ART

It is known that water- and oil-repellency and soil resistant property (i.e. antifouling property) can be imparted to a substrate by treating the substrate with a compound having fluoroalkyl group (Rf group), which substrate is, for example, a masonry such as stone material, glass, ceramic products, fabric products, paper, wood, leather, metal and plastics. Such a treatment is practically used.

For example, in a surface treatment of a masonry such as stone material, the below-mentioned methods for imparting water- and oil-repellency and soil resistant property have been studied.

For example, JP-A-57-23662 describes that an acrylate having a Rf group is coated on a concrete or a stone to form a protective film. Each of JP-A-07-109317 and WO2004/041880 discloses a treatment agent comprising a fluorine-containing copolymer comprising a monomer having a Rf group and a silicon-containing vinyl monomer.

JP-A-11-507687 discloses a masonry-treatment agent comprising a water-soluble polymer having a Rf group, a carboxyl group, an oxyalkylene group and a silyl group. EP1225187 discloses the treatment of ceramics with a polymer having chain transfer ends containing silyl group, wherein the polymer comprises a Rf group-containing monomer, a fluorine-free monomer and a silyl group-containing monomer. WO2005/097850 discloses the treatment using a polymer comprising a fluorine-containing monomer, a monomer having an acidic group and a monomer having a hydrophobic group. JP-A-2000-264757 proposes that a masonry is treated with a phosphate ester having a Rf group.

These treatment agents, however, do not have both of sufficient water repellency and sufficient oil repellency and cannot impart sufficient soil resistance required for a masonry-treatment agent.

Further, these treatment agents substantially comprise a Rf group having at least 8 carbon atoms and treatment agents comprising a short Rf group having at most 6 carbon atoms fail to show sufficient effects.

WO2004/108779 discloses a treatment agent derived from a polymer comprising a fluorine-containing monomer which is substituted with, for example, a fluorine atom or a chlorine atom at the alpha-position. Such a polymer has an inferior copolymerizability caused by an influence to a polymerization rate due to the alpha-substitution, so that sufficient effects are not obtained.

Representative examples of the fluorine-free monomer which copolymerizes with a monomer having a Rf group include a monomer having a long chain hydrocarbon group, for example, a monomer having a stearyl group. Such monomer contributes to the solubility in a petroleum-based solvent, on the other hand, the copolymer derived from the monomers is insoluble at a low temperature due to its crystallinity.

Described below are the environmental problems raised by perfluorooctanoic acid (PFOA). The results of the latest researches [a report of the Environmental Protection Agency (EPA), "PRELIMINARY RISK ASSESSMENT OF THE DEVELOPMENTAL TOXICITY ASSOCIATED WITH EXPOSURE TO PERFLUOROOCTANOIC ACID AND ITS SALTS" (http://www.epa.gov/opptintr/pfoa/pfoara.pdf)] have taught that PFOA (perfluorooctanoic acid), one of long chain fluoroalkyl compounds, is proved to have a danger to burden the environment. Under such a situation, EPA announced on April 14, 2003 that the scientific investigation on PFOA should be more intensively executed.

On the other hand, the Federal Register (FR Vol.68, No.73/April 16, 2003 [FRL-7303-8], http://www.epa.gov/opptintr/pfoa/pfoafr.pdf), EPA Environmental News FOR RELEASE: MONDAY APRIL 14, 2003 EPA INTENSIFIES SCIENTIFIC INVESTIGATION OF A CHEMICAL PROCESSING AID (http://www.epa.gov/opptintr/pfoa/pfoaprs.pdf) and EPA OPPT FACT SHEET April 14, 2003 (http://www.epa.gov/opptintr/pfoa/pfoafacts.pdf) have published that telomers have a possibility to produce PFOA when decomposed or metabolized (herein, the telomer means a long chain fluoroalkyl group), and also that telomers have been widely used in foam fire extinguishers, care products, washing materials, carpets, textiles, paper, leather, etc., in order to impart water- and oil- repellency and soil resistant property to them.

EP1225187 discloses oil- and water repellent compositions for the treatment of surfaces and soil repellency and soil release of said treated surfaces and discloses fluorinated oligomers dissolved or dispersed in an organic solvent, said oligomers contain units derived from fluorinated monomers, non-fluorinated monomers, and units having a silyl group.

EP-A-0 561 708 discloses organosilane compounds for treating porous substrates to render them to water- and oil- repellent and to enhance the cleanability of their surfaces, which are compounds of a specified general formula (R¹)ₐ(R²)_{b}(R³)_{c}XSi(Z)ₙ[(Y)Si(R⁴)_{d}(R⁵)ₑ(R⁶)_{f}]ₘ and comprise hydrophilic, hydrophobic, and oleophobic components which can effectively repel both water and oil based challenges and enhance the cleanability of a protected substrate.

WO 2003/018508 relates to a water-soluble and shelf-stable aqueous fluorochemical polymeric treatment comprising a water-soluble or dispersible fluorochemical polymer containing only carbon atoms in the backbone, with a plurality of each of (a) fluoroaliphatic groups, (b) carboxyl-containing groups, (c) silyl groups and optionally (d) other non-hydrophilic groups pendent from the backbone. The treatment can and the shelf-stable aqueous solutions thereof can be applied to porous substrates in aqueous solution to form an invisible and water-insoluble coating that repels both water and oil, resists soiling, and that cannot be easily washed from the surface of the substrate.

### DISCLOSURE OF THE INVENTION

### Problems to be Solved by the Invention

An object of the present invention is to provide a water-repellent oil-repellent soil-resistant agent which has excellent solubility in solvent, particularly which shows excellent effects for a masonry.

### Means for Solving the Problems

The present invention relates to a fluorine-containing polymer (1) comprising:
(A) repeating units derived from a fluorine-containing acrylate monomer of the formula:

   Rf-Y-O-C(=O)-CX=CH₂

   wherein
   X is H, methyl, F, Cl, Br, I, CFX¹X² (in which X¹ and X² are each H, F, Cl, Br or I), cyano, linear or branched C₁₋₂₁-fluoroalkyl, or optionally substituted benzyl or phenyl;
   Y is a direct bond, a C₁₋₁₀-aliphatic group optionally having an oxygen atom, a C₆₋₁₀-aromatic, -cycloaliphatic or -araliphatic group optionally having an oxygen atom, -CH₂CH₂N(R¹)SO₂- (in which R¹ is C₁₋₄-alkyl) or -CH₂CH(OY¹)CH₂- (in which Y¹ is H or acetyl); and
   Rf is linear or branched C₁₋₇-fluoroalkyl, C₂₋₇-fluoroalkenyl, or a fluoroether group having a total of 1-200 repeating units selected from -C₃F₆O-, -C₂F₄O- and -CF₂O- ; and
(B) repeating units derived from at least one fluorine-free acrylate monomer (B1) having a cyclic hydrocarbon group.

Further and preferred Embodiments of the invention are as defined in the appended claims and/or the following detailed description.

### EFFECTS OF THE INVENTION

The present invention can provide a water-repellent oil-repellent soil-resistant agent having a good solubility in solvent, which agent particularly can impart excellent water- and oil-repellency and soil resistant property (i.e. antifouling property) to a masonry by treating with the present soil-resistant agent.

### MODES FOR CARRYING OUT THE INVENTION

The fluorine-containing polymer of the present inventioncomprises repeating units derived from each of monomers (A) and (B1).

The acrylate monomer (A) having the fluorine-containing group is represented by the formula: 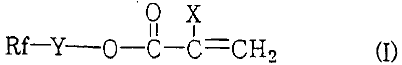 wherein
X is a hydrogen atom, a methyl group, a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group;
Y is a direct bond, an aliphatic group having 1 to 10 carbon atoms which optionally has an oxygen atom, an aromatic, cycloaliphatic or araliphatic group having 6 to 10 carbon atoms which optionally has an oxygen atom, a -CH₂CH₂N(R¹)SO₂-group (in which R¹ is an alkyl group having 1 to 4 carbon atoms) or a -CH₂CH(OY¹)CH₂- group (in which Y¹ is a hydrogen atom or an acetyl group); and
Rf is a linear or branched fluoroalkyl group having 1 to 7 carbon atoms, a fluoroalkenyl group having 2 to 7 carbon atoms, or a fluoroether group having totally 1 to 200 repeating units selected from the group consisting of repeating units: -C₃F₆O-, -C₂F₄O- and -CF₂O-].

In the Formula (I), when Rf is a fluoroalkyl group, it is preferably a perfluoroalkyl group. Examples of the Rf group include -CF₃, -CF₂CF₃, -CF₂CF₂CF₃,-CF(CF₃)₂, -CF₂CF₂CF₂CF₃, -CF₂CF(CF₃) ₂, -C(CF₃)₃, -(CF₂)₄CF₃, (CF₂)₂CF(CF₃)₂, -CF₂C(CF₃)₃, -CF(CF₃)CF₂CF₂CF₃, -(CF₂)₅CF₃,-(CF₂)₃CF(CF₃)₂, -(CF₂)₄CF(CF₃)₂, -(CF₂)₂H, -CF₂CFHCF₃H, -(CF₂)₄H and -(CF₂)₆H. If Rf is a fluoroalkyl group, it has 1 to 7, for example, 2 to 6, particularly 4 to 6, more particularly 6 carbon atoms in view of the PFOA and the function thereof as mentioned above.

When Rf is a fluoroalkenyl group, it is preferably a perfluoroalkenyl group. Examples of the Rf group include -CF=CF(CF₃), -CF=C(CF₃)₂, -CF=C(CF₃)(CF₂CF₂CF₃), -CF=C(CF₃)(CF(CF₃)₂), -C(CF₃)=CF(CF(CF₃)₂) and -C(CF₂CF₃)=C(CF₃)₂. If Rf is a fluoroalkenyl group it has 2 to 7, particularly 3 to 6, more particularly 6 carbon atoms.

When Rf is a fluoroether group, it has at least one repeating unit selected from -C₃F₆O-, -C₂F₄O- and -CF₂O- (a oxyperfluoroalkylene group). The -C₃F₆O- group is -CF₂CF₂CF₂O-or -CF₂C(CF₃)FO-. The -C₂F₄O- group is generally -CF₂CF₂O-. The total number of the oxyperfluoroalkylene group is from 1 to 200, for example, from 1 to 100, particularly from 5 to 50. The fluoroalkylene group has an end group which directly bonds to the oxyperfluoroalkylene repeated unit. Examples of the end group include a hydrogen atom, a halogen atom (such as a fluorine atom), an alcohol group (such as HOCH₂-), an epoxy group (such as 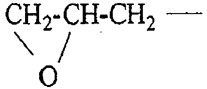 ), an amine group (such as H₂N-), a carboxylic group (such as HOOC-), an acid halide group (such as F(O=)C-), a chloromethyl group (such as ClH₂C-). The fluoroether group may have a fluoroalkylene group, in particular a perfluoroalkylene group having 1 to 10 carbon atoms, in addition to the oxyperfluoroalkylene repeating unit(s) and the end group. Examples of the fluoroalkylene group having 1 to 10 carbon atoms are -CF₂- and -CF₂CF₂-.

Examples of the fluoroether group (particularly the perfluoroether group), which are the representatives of the Rf group, include the followings:
F-(CF₂CF₂CF₂O)ₙ-CF₂CF₂- (n is from 1 to 200),
F-(CF₂(CF₃)FO)ₙ-CF₂CF₂- (n is from 1 to 200),
F-(CF₂(CF₃)FO)ₙ-(CF₂O)ₘ-CF₂CF₂- (total of n and m is from 1 to 200), and
F-(CF₂CF₂O)ₙ-(CF₂O)ₘ-CF₂CF₂- (total of n and m is from 1 to 200).

Y is a direct bond, an aliphatic group having 1 to 10 carbon atoms which optionally has an oxygen atom, an aromatic, cycloaliphatic or araliphatic group having 6 to 10 carbon atoms which optionally has an oxygen atom, a - CH₂CH₂N(R¹)SO₂- group (in which R¹ is an alkyl group having 1 to 4 carbon atoms) or a -CH₂CH(OY¹)CH₂- group (in which Y¹ is a hydrogen atom or an acetyl group). The aliphatic group is preferably an alkylene group (having particularly 1 to 4, for example, 1 or 2 carbon atoms). The aromatic, cycloaliphatic and aralkyl groups may be substituted or unsubstituted.

Examples of the above fluorine-containing acrylate monomer include the followings:
Rf-(CH₂)₁₀OCOCH=CH₂
Rf-(CH₂)₁₀OCOC(CH₃)=CH₂
Rf-CH₂OCOCH=CH₂
Rf-CH₂OCOC(CH₃)=CH₂
Rf-(CH₂)₂OCOCH=CH₂
Rf-(CH₂)₂OCOC(CH₃)=CH₂
Rf-SO₂N(CH₃)(CH₂)₂OCOCH=CH₂
Rf-SO₂N(C₂H₅)(CH₂)₂OCOCH=CH₂
Rf-CH₂CH(OCOCH₃)CH₂OCOC(CH₃)=CH₂
Rf-CH₂CH(OH)CH₂OCOCH=CH₂

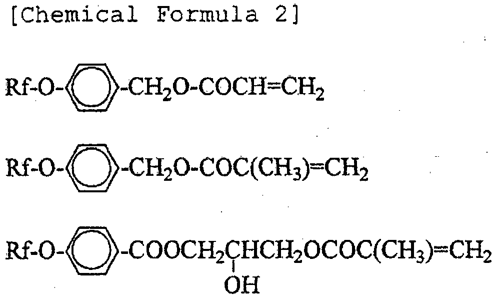

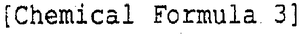

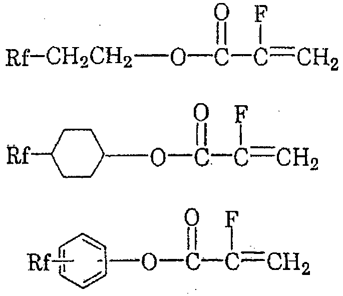

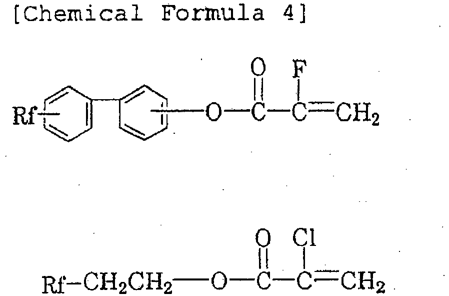

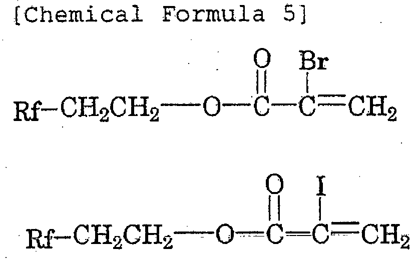

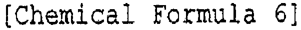

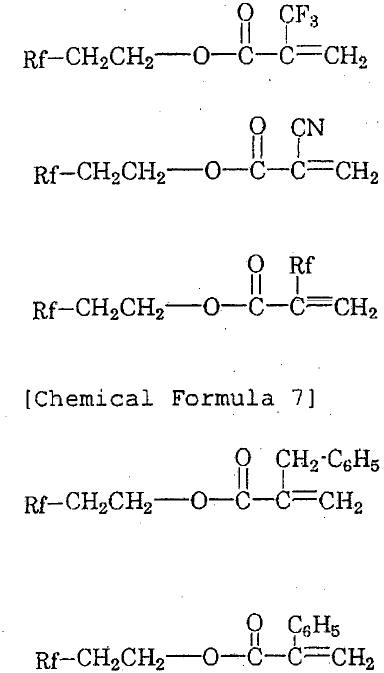

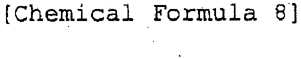

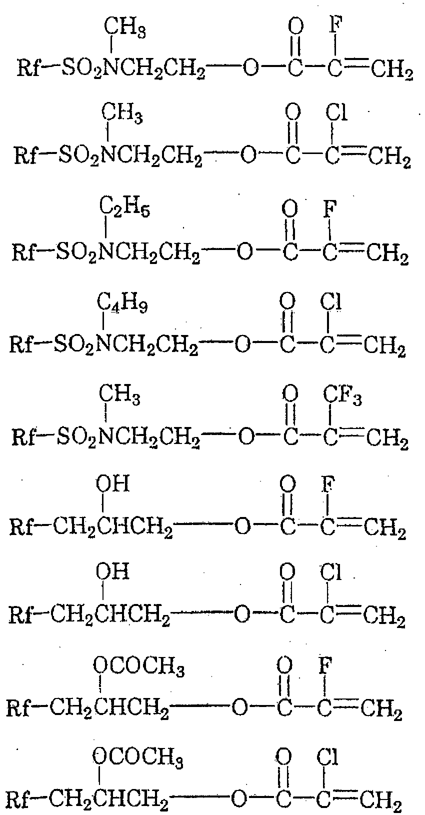

wherein Rf is a linear or branched fluoroalkyl group having 1 to 7 carbon atoms, a fluoroalkenyl group having 2 to 7 carbon atoms, or a fluoroether group having totally 1 to 200 repeating units selected from the group consisting of the repeating units: -C₃F₆O-, -C₂F₄O- and -CF₂O-.

The fluorine-free acrylate monomer (B) is a monomer which is free from an fluorine atom and is at least one monomer selected from (B1) a monomer having a cyclic hydrocarbon group. The monomer (B1) is a compound which has a cyclic hydrocarbon group and a polymerizable moiety. Examples of the cyclic hydrocarbon group include saturated or unsaturated, monocyclic group, polycyclic group and bridged ring group. The cyclic hydrocarbon group preferably has 4 to 20 carbon atoms. Examples of the cyclic hydrocarbon group include a cyclic aliphatic group having 4 to 20, particularly 5 to 12 carbon atoms, an aromatic group having 6 to 20 carbon atoms and an araliphatic group having 7 to 20 carbon atoms. The cyclic hydrocarbon group preferably has at most 15, for example, at most 10 carbon atoms. Specific examples of the cyclic hydrocarbon group include a cyclohexyl group, a t-butyl cyclohexyl group, a benzyl group, an isobornyl group, a dicyclopentanyl group and a dicyclopentenyl group. The polymerizable moiety is preferably a group having a carbon-carbon double bond. Examples of the polymerizable moiety include an acrylate group and a methacrylate group, and the methacrylate group is particularly preferable. In general, the cyclic hydrocarbon group directly bonds to the polymerizable moiety.

Examples of the monomer having a cyclic hydrocarbon group include cyclohexyl methacrylate, t-butylcyclohexyl methacrylate, benzyl methacrylate, isobornyl methacrylate, isobornyl acrylate, dicyclopentanyl methacrylate, dicyclopentanyl acrylate and dicyclopentenyl acrylate.

A monomer (B2) having a short chain hydrocarbon group is a compound which has a short chain hydrocarbon group and a polymerizable moiety. The short chain hydrocarbon group includes also a hydrogen atom. The short chain hydrocarbon group preferably has 0 to 6, particularly 0 to 4 (for example, 1 to 4) carbon atoms. Examples of the short chain hydrocarbon group preferably include a hydrogen atom, or a linear or branched aliphatic hydrocarbon group (such as an alkyl group) having 1 to 6, particularly 1 to 4 carbon atoms, in particular a methyl group, an ethyl group, a branched aliphatic hydrocarbon group having 3 to 6, particularly 3 to 4 carbon atoms, more particularly a branched propyl group (such as isopropyl group) and a branched butyl group (such as an isobutyl group and a t-butyl group) as well as a branched pentyl group and a branched hexyl group. The polymerizable moiety is preferably a group having a carbon-carbon double bond. Examples of the polymerizable moiety include an acrylate group and a methacrylate group, and the methacrylate group is particularly preferable. In general, the short chain hydrocarbon group directly bonds to the polymerizable moiety.

Specific examples of the monomer (B2) having a short chain hydrocarbon group include methacrylic acid, acrylic acid, methyl methacrylate, ethyl methacrylate, isopropyl methacrylate, isobutyl methacrylate, t-butyl methacrylate, neopentyl methacrylate, 3,3-dimethylbutyl methacrylate, 3,3-dimethyl-2-butyl methacrylate.

The monomer constituting the fluorine-containing polymer may include, (C) a monomer having a silane group, in addition to the monomers (A) and (B). The monomer (C) is preferably a compound which has the silane group (particularly an end silane group) and a carbon-carbon double bond. The monomer having a silane group may be an end-capped silane coupling agent.

Specific examples of the monomer having a silane group include the followings:
CH₂=CHCO₂ (CH₂)₃ Si(OCH₃)₃,
CH₂=CHCO₂(CH₂)₃Si(OC₂H₅)₃,
CH₂=C(CH₃)CO₂(CH₂)₃ Si(OCH₃)₃,
(gamma-methacryloxypropyl trimethoxysilane)
CH₂=C (CH₃)CO₂(CH₂)₃Si(OC₂H₅)₃,
CH₂ =CHCO₂(CH₂)₂ SiCH₃(OC₂H₅)₂,
CH₂=C(CH₃)CO₂(CH₂)₃SiC₂H₅(OCH₃)₂,
CH₂=C(CH₃)CO₂(CH₂)₃Si(CH₃)₂(OC₂H₅),
CH₂=C(CH₃)CO₂ (CH₂)₃Si(CH₃)₂OH,
CH₂=CHCO₂(CH₂)₃SiCH₃[ON(CH₃)C₂H₅] ,
CH₂=C(CH₃)CO₂(CH₂)₃SiC₆H₅ [ON(CH₃C₂H₅]₂,
CH₂=CHSi(OCH₃)₃,
CH₂=CHSi(OC₂H₅)₃,
CH₂=CHSiCH₃ (OCH₃)₂,
CH₂=CHSi(CH₃)₂(OC₂H₅),
CH₂=CHSi(CH₃)₂SiCH₃ (OCH₃)₂,
CH₂=CHSiCH₃[ON(CH₃)C₂H₅]₂,
vinyltrichlorosilane, and
vinyltris(2-methoxyethoxy)silane.

The monomers constituting the fluorine-containing polymer may include (D) an other monomer (D) according to the necessity, in addition to the monomers (A), (B) and (C). The other monomer (D) is preferably a monomer which is free from both fluorine and silicon. Examples of the other monomer (D) include a monomer having a hydrocarbon group other than the monomers (B1) and (B2), ethylene, vinyl acetate, vinyl halide (for example, vinyl chloride), vinylidene halide (for example, vinylidene chloride), acrylonitrile, 2-hydroxyethyl (meth)acrylate, 2-hydroxypropyl (meth)acrylate, glycerol mono(meth)acrylate, polyethyleneglycol (meth)acrylate, polypropyleneglycol (meth)acrylate, methoxypolyethyleneglycol (meth) acrylate, methoxypolypropyleneglycol (meth)acrylate, tetrahydrofurfuryl (meth)acrylate, 3-chloro-2-hydroxypropyl (meth)acrylate, vinyl alkyl ketone, vinyl alkyl ether, isoprene, chloroprene and butadiene, but are not limited to these examples.

The weight-average molecular weight of the fluorine-containing polymer may be, for example, from 2,000 to 5,000,000, particularly from 3,000 to 5,000,000, especially from 10,000 to 1,000,000. The weight-average molecular weight of the fluorine-containing polymer was measured by GPC (gel permeation chromatography) (in terms of polystyrene).

The fluorine-containing polymer of the present invention may be constituted by a combination of the repeating units derived from the following monomers:
(1) monomer (A) + monomer (B)
(2) monomer (A) + monomer (B) + monomer (C)
(3) monomer (A) + monomer (B) + monomer (D)
(4) monomer (A) + monomer (B) + monomer (C) + monomer (D)

The monomer (B) may be the cyclic hydrocarbon group (B1) or both (B1) and the short chain hydrocarbon group (B2) .

In the fluorine-containing polymer, the amount of the monomer (B) may be from 1 to 300 parts by weight, for example, from 3 to 150 parts by weight, particularly from 5 to 100 parts by weight, especially from 30 to 100 parts by weight;
the amount of the monomer (C) may be from 0 to 20 parts by weight, for example from 1 to 10 parts by weight; and the amount of the monomer (D) may be from 0 to 50 parts by weight, for example, from 1 to 10 parts by weight, based on 100 parts by weight of the monomer (A).

The amount of the monomer (B1) may be up to 200 parts by weight, for example, from 1 to 100 parts by weight, particularly from 30 to 100 parts by weight and the amount of the monomer (B2) may be from 0 to 200 parts by weight, for example, from 1 to 50 parts by weight, based on 100 parts by weight of the monomer (A).

When the amount of the monomer (B1) is as mentioned above, the solubility in petroleum solvent is higher. When the amounts of the monomers (A), (B1) and (B2) are as mentioned above, the water- and oil-repellency and soil resistant property are higher.

The fluorine-containing polymer of the present invention can be prepared by any of conventional polymerization methods. Conditions for polymerization reaction can be arbitrarily selected. Such polymerization methods include a solution polymerization, a suspension polymerization and an emulsion polymerization.

In a solution polymerization, it is possible to employ a method of dissolving a monomer in an organic solvent in the presence of a polymerization initiator, replacing the atmosphere by nitrogen and stirring the solution with heating at a temperature within a range from 50 to 120°C for 1 to 10 hours. Examples of the polymerization initiator include azobisisobutyronitrile, azobisisovaleronitrile, benzoyl peroxide, di-tert-butyl peroxide, lauryl peroxide, cumene hydroperoxide, t-butyl peroxypivalate and diisopropyl peroxydicarbonate. The polymerization initiator may be used in the amount within a range from 0.01 to 5 parts by weight based on 100 parts by weight of the monomer.

The organic solvent is inert to the monomers and dissolves the monomers. Examples of such organic solvent include pentane, hexane, heptane, octane, isooctane, cyclohexane, benzene, toluene, xylene, petroleum ether, commercially available petroleum solvent (for example, EXXSOL D40 and ISOPER E (manufactured by Exxon Mobil Corporation)), tetrahydrofuran, 1,4-dioxane, acetone, methyl ethyl ketone, methyl isobutyl ketone, methyl acetate, ethyl acetate, butyl acetate, t-butyl acetate, isopropyl alcohol, propyleneglycol methylether acetate, p-chlorobenzotrifluoride, 1,1,2,2-tetrachloroethane, 1,1,1-trichloroethane, trichloroethylene, perchloroethylene, tetrachlorodifluoroethane and trichlorotrifluoroethane. The organic solvent may be used in an amount within a range from 50 to 1,000 parts by weight, based on 100 parts by weight of the total of the monomer.

In an emulsion polymerization, there can be used a method of emulsifying monomers in water in the presence of a polymerization initiator and an emulsifying agent, replacing the atmosphere by nitrogen, and polymerizing with stirring, for example, at the temperature within the range from 50°C to 80°C for 1 hour to 10 hours. As the polymerization initiator, for example, water-soluble initiators (e.g., azobisisobutylamidine dihydrochloride, sodium peroxide, potassium persulfate and ammonium persulfate) and oil-soluble initiators (e.g., azobisisobutyronitrile, azobisisovaleronitrile, benzoyl peroxide, di-tert-butyl peroxide, lauryl peroxide, cumene hydroperoxide, t-butyl peroxypivalate and diisopropyl peroxydicarbonate) are used. The polymerization initiator may be used in an amount within the range from 0.01 to 5 parts by weight, based on 100 parts by weight of the monomer.

In the present invention, the treatment agent comprises (1) fluorine-containing polymer and (2) liquid medium, for example, organic solvent and/or water. The treatment agent may be in a form of a solution of a fluorine-containing polymer (a solution of an organic solvent or an aqueous solution) or a dispersion of a fluorine-containing polymer (in an organic solvent or in water). The treatment agent of the present invention is preferably in the form of a solution of the fluorine-containing polymer.

In the treatment agent, the amount of the fluorine-containing polymer is not limited and can be selected from a range wherein the polymer can evenly dissolve or disperse the monomers therein. For example, the amount of the fluorine-containing polymer may be within a range from 0.1 to 80% by weight, for example from 0.2 to 20% by weight, based on 100 parts by weight of the monomer.

The treatment agent of the present invention may contain (3) a silicon-containing compound, in addition to the fluorine-containing polymer (1) and the liquid medium (2).

The silicon-containing compound (3) is preferably a compound which has at least one siloxane linkage.

The silicon-containing compound (3) may be a compound which is represented by the general formula as follows: 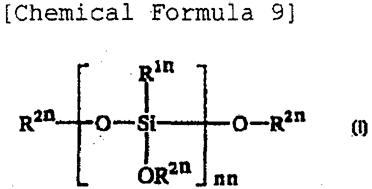 wherein R¹ⁿ is an alkyl group having 1 to 18 carbon atoms and, when nn is at least 2 or more, the R¹ⁿ groups may be the same or different. R²ⁿ is a hydrogen atom or an alkyl group having 1 to 5 carbon atoms and, when nn is 2 or more, the R²ⁿ groups may be the same or different; and nn is an integer of 1 to 20.

The alkyl group containing 1 to 18 carbon atoms as represented by R¹ⁿ (i.e., a saturated aliphatic hydrocarbon group) is not particularly restricted but includes, among others, a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group and an octadecyl group. These may be straight-chained or branched.

The alkyl group containing 1 to 5 carbon atoms as represented by R²ⁿ is not particularly restricted but includes, among others, methyl, ethyl, propyl, butyl and pentyl. These may be straight-chained or branched.

The symbol nn represents an integer of 1 to 20, for example an integer of 1 to 10.

As said silicon-containing compound (3), there may more specifically be mentioned, among others, methyltrimethoxysilane, ethyltrimethoxysilane, propyltrimethoxysilane, butyltrimethoxysilane, pentyltrimethoxysilane, hexyltrimethoxysilane, heptyltrimethoxysilane, octyltrimethoxysilane, nonyltrimethoxysilane, decyltrimethoxysilane, undecyltrimethoxysilane, dodecyltrimethoxysilane, tridecyltrimethoxysilane, tetradecyltrimethoxysilane, pentadecyltrimethoxysilane, hexadecyltrimethoxysilane, heptadecyltrimethoxysilane, octadecyltrimethoxysilane, methyltriethoxysilane, ethyltriethoxysilane, propyltriethoxysilane, butyltriethoxysilane, pentyltriethoxysilane, hexyltriethoxysilane, heptyltriethoxysilane, octyltriethoxysilane, nonyltriethoxysilane, decyltriethoxysilane, undecyltriethoxysilane, dodecyltriethoxysilane, tridecyltriethoxysilane, tetradecyltriethoxysilane, pentadecyltriethoxysilane, hexadecyltriethoxysilane, heptadecyltriethoxysilane, octadecyltriethoxysilane and so forth. Among them, methyltrimethoxysilane, methyltriethoxysilane, hexyltriethoxysilane and octyltriethoxysilane are preferred.

The above-mentioned silicon-containing compounds may be used also in their dimer form as the silicon-containing compound (3) in the present invention. As such, there may be mentioned those of general formula (I) in which nn is 2 or 3, for instance. Furthermore, those in which nn is up to 20 may be used as well.

The amount of the silicon-containing compound (3) may be from 0 to 200 parts by weight, for example, from 0 to 50 parts by weight, e.g., from 0.1 to 50 parts by weight, based on 100 parts by weight of the fluorine-containing polymer (1).

Further,the treatment agent may include, in addition to the above compounds (1) to (3), any of the other water-repellent agent, the other oil-repellent agent, drying rate adjuster, crosslinking agent, film-forming auxiliary, compatibilizing agent, surface active agent, antifreezing agent, viscosity adjusting agent, UV absorber, antioxidizing agent, pH adjuster, antifoam agent, feeling adjuster, slidability adjuster, antistatic agent, hydrophilizing agent, antibacterial agent, antiseptic agent, insect repellent, fragrance and flame retardant, according to the necessity.

The present invention provides a substrate with water- and oil-repellency and soil resistant property by applying the treatment agent to the substrate.

Examples of the substrate include masonry such as stone material, glass, ceramic products, fabric products, paper, wood, leather, metal and plastics. Examples of the masonry include stone, brick, concrete and tile. Examples of stone include natural stone (for example, marble and granite), and artificial stone.

The masonry is treated by treating (i.e. applying) the treatment agent to the substrate. The treatment agent is coated in an amount from 0.05 to 50 g/m², for example, from 0.1 to 20 g/m², preferably from 1 to 10 g/m² of the fluorine-containing polymer in the treatment agent. The coating may be conducted once or a plurality of times. The coating method may be any of brushing, spraying, rolling, dipping, coating using rags containing the treatment agent, or the like. Excess treatment agent may be wiped off according to the necessity. Then the treatment agent is dried to remove the liquid medium. The drying may be conducted at room temperature (20°C), and/or the baking may be conducted at 80°C to 250°C.

The term "treatment" means that a treatment agent is applied to a substrate by immersion, spraying, coating or the like. The treatment gives the result that a fluorine-containing polymer which is an active component of the treatment agent is adhered to surfaces of the substrate and/or penetrated into the internal parts of the substrate.

### EXAMPLES

Hereinafter, Examples and Comparative Examples are shown to specifically illustrate the present invention. However, each of these is merely a specific explanation, so that the present invention is not limited to them. In the followings, % is by weight unless otherwise specified.

Tests were conducted in the procedure as follows.

### Soil Resistance Test

A soil was put on a treated substrate, and droplets were left for 24 hours and wiped off with a paper towel. The visual evaluation was conducted according to the following criteria.
1 : : Deep stain, and oil droplet widely spread
2 : Deep stain, and slight or no oil droplet spread
3 : Moderate stain, and no spread
4 : Slight stain
5 : No stain.

### Solubility Test (Low Temperature)

As an evaluation of solubility, a solution obtained from the polymerization reaction was left in a bath at a low temperature (15°C) for 24 hours, and the condition of the solution was visually evaluated.
Poor = insoluble matter formed
Good = uniform solution

### Solubility Test (Diluted)

The solution obtained from the polymerization reaction was diluted with EXXSOL D40 as a petroleum solvent at room temperature (20°C) to give a treatment liquid having a solid concentration of 3%. Then the condition of the treatment liquid was visually evaluated.
Poor = insoluble matter formed
Good = uniform solution

### Example 1 (Reference, not according to the invention)

Into a 200 cc four-necked flask equipped with a stirrer, an inert gas inlet, a condenser and a thermometer, 13.0 g of CF₃CF₂(CF₂CF₂)₂CH₂CH₂OCOC (CH₃)=CH₂, 6. 5 g of methyl methacrylate, 0.5 g of Y(gamma)-methacryloxypropyltrimethoxysilane (SZ6030, manufactured by Toray Dow Corning Silicone Corporation) and 54.0 g of butyl acetate were charged and heated to 70°C. Then, 1.4 g of t-butylperoxy pivalate (PERBUTYL PV, manufactured by NOF Corporation) was added and the polymerization reaction was conducted with stirring at 70°C for at least 12 hours. A gas chromatography revealed that a polymerization reaction conversion was at least 97%. The obtained polymer solution was diluted with butyl acetate to give a treatment liquid having a solid content of 3%. The monomer composition in the polymer was substantially the same as the charged monomer composition. The weight-average molecular weight of the polymer was 15,000 measured by GPC (gel permeation chromatography) (in terms of polystyrene).

A surface of each of polished granite and limestone (purchased from Inax Corp.) was coated with the treatment liquid (1 mL of the treatment liquid was applied to an area of 5 cm x 10 cm). After left at room temperature for 10 minutes, a superfluous treatment liquid was wiped off. After left at room temperature for 24 hours, a soil resistance test was conducted.

A solubility test was also conducted. The results are shown in Table 1.

### Examples 2 and 3

The polymerization reaction was conducted in the same manner as in Example 1 to obtain a polymer solution except that cyclohexyl methacrylate in Example 2 or isobornyl methacrylate in Example 3 was used instead of methyl methacrylate. The composition of the monomers in the produced polymer was substantially the same as that of the charged monomers. The weight-average molecular weight (Mw) of the polymer was 14,000 (Example 2) and 13,000 (Example 3), respectively. The polymer solution was processed with butyl acetate to give a treatment liquid having a solid content of 3% as in Example 1, and then the soil resistance test was conducted. The evaluation results are shown in Table 1.

### Comparative Example 1

The soil resistance test was conducted in the same manner as Example 1 without coating granite and limestone used in Example 1 with the treatment agent. The evaluation results are shown in Table 1.

### Comparative Example 2

The polymerization reaction was conducted in the same manner as in Example 1 to obtain a polymer solution except that methyl methacrylate was changed to stearyl acrylate. The composition of the monomers in the produced polymer was substantially the same as that of the charged monomers. The weight-average molecular weight (Mw) of the polymer was 17,000. The polymer solution was processed with butyl acetate to give a treatment liquid having a solid content of 3% as in Example 1, and then the soil resistance test was conducted. The evaluation results are shown in Table 1.

### Comparative Examples 3 and 4

The polymerization reaction was conducted in the same manner as in Example 1 to obtain a polymer solution except that stearyl methacrylate in Comparative Example 3 or lauryl methacrylate in Comparative Example 4 was used instead of methyl methacrylate. The composition of the monomers in the produced polymer was substantially the same as that of the charged monomers. The weight-average molecular weight (Mw) of the polymer was 12,000 (Comparative Example 3) and 15,000 (Comparative Example 4). The polymer solution was processed with butyl acetate to give a treatment liquid having a solid content of 3% as in Example 1, and then the soil resistance test was conducted. The evaluation results are shown in Table 1.

### Example 4

Using the same apparatus as in Example 1, 11.0 g of CF₃CF₂(CF₂CF₂)₂CH₂CH₂OCOC(CH₃)=CH₂, 8.5 g of isobornyl methacrylate, 0.5 g of y(gamma)-methacryloxypropyltrimethoxysilane (SZ6030, manufactured by Toray Dow Corning Silicone Corporation) and 54.0 g of butyl acetate were charged and heated to 70°C. Then, 1.4 g of PERBUTYL PV was added and the polymerization reaction was conducted with stirring at 70°C for at least 12 hours. A gas chromatography revealed that a polymerization reaction conversion was at least 97%. The composition of the monomers in the produced polymer was substantially the same as that of the charged monomers. The weight-average molecular weight (Mw) of the polymer was 13,000. The obtained polymerization solution was diluted with a petroleum-based solvent (EXXSOL D40, manufactured by Exxon Mobil Corporation) to give a treatment liquid having a solid concentration of 3%. The polymer solution was treated as in Example 1, and then the soil resistance test was conducted. The evaluation results are shown in Table 2. As the evaluation of the solubility, the solution obtained from the polymerization reaction was subjected to a solubility test at low temperature (-15°C) and a solubility test at room temperature being diluted with EXXSOL D40 as the petroleum-based solvent.

The evaluation results are shown in Table 2.

### Example 5

Using the same apparatus as in Example 1, 10.0 g of CF₃CF₂(CF₂CF₂)₂CH₂CH₂OCOC(CH₃)=CH₂, 8.5 g of isobornyl methacrylate, 1.0 g of methyl methacrylate, 0.5 g of γ(gamma)-methacryloxypropyltrimethoxysilane (SZ6030, manufactured by Toray Dow Corning Silicone Corporation) and 54.0 g of butyl acetate were charged and heated to 70°C. Then, 1.4 g of PERBUTYL PV was added and the polymerization reaction was conducted with stirring at 70°C for at least 12 hours. A gas chromatography revealed that a polymerization reaction conversion was at least 97%. The composition of the monomers in the produced polymer was substantially the same as that of the charged monomers. The weight-average molecular weight (Mw) of the polymer was 14,000. The obtained polymerization solution was diluted with a petroleum-based solvent (EXXSOL D40, manufactured by Exxon Mobil Corporation) to give a treatment liquid having a solid concentration of 3%. The polymer solution was treated as in Example 1, and then the soil resistance test was conducted. The evaluation results are shown in Table 2.

### Example 6

Using the same apparatus as in Example 1, 10.0 g of CF₃CF₂(CF₂CF₂)₂CH₂CH₂OCOC(CH₃)=CH₂, 8.5 g of isobornyl methacrylate, 1.5 g of methylmethacrylate and 54.0 g of butyl acetate were charged and heated to 70°C. Then, 1.4 g of PERBUTYL PV was added and the polymerization reaction was conducted with stirring at 70°C for at least 12 hours. A gas chromatography revealed that a polymerization reaction conversion was at least 97%. The composition of the monomers in the produced polymer was substantially the same as that of the charged monomers. The weight-average molecular weight (Mw) of the polymer was 15,000. The obtained polymerization solution was diluted with a petroleum-based solvent (EXXSOL D40, manufactured by Exxon Mobil Corporation) to give a treatment liquid having a solid concentration of 3%. The polymer solution was treated as in Example 1, and then the soil resistance test was conducted. The evaluation results are shown in Table 2.

### Example 7

The polymerization reaction was conducted in the same manner as in Example 4 to obtain a polymer solution except that isobornyl methacrylate was changed to dicyclopentanyl methacrylate. The composition of the monomers in the produced polymer was substantially the same as that of the charged monomers. The weight-average molecular weight (Mw) of the polymer was 14,000. The polymer solution was processed with a petroleum-based solvent (EXXSOL D40, manufactured by Exxon Mobil Corporation) to give a treatment liquid having a solid content of 3% as in Example 4, and then the soil resistance test was conducted. The evaluation results are shown in Table 2.

### Comparative Example 5

The polymer solution obtained in Comparative Example 2 was processed with a petroleum-based solvent (EXXSOL D40, manufactured by Exxon Mobil Corporation) to give a treatment liquid having a solid content of 3% as in Example 4, and then the soil resistance test was conducted. The evaluation results are shown in Table 2.

### Comparative Example 6

The polymer solution obtained in Comparative Example 3 was processed with a petroleum-based solvent (EXXSOL D40, manufactured by Exxon Mobil Corporation) to give a treatment liquid having a solid content of 3% as in Example 4, and then the soil resistance test was conducted. The evaluation results are shown in Table 2.

**[Table 1]**

| Evaluation of Solubility and Results of Soil Resistance Test | | | | | |
|---|---|---|---|---|---|
| | Solubility Test | Soil Resistance Test (granite / limestone) | | | |
| | Low temperature | Olive oil | Waste oil | Red wine | Coffee |
| Example 1 | Good | 5/5 | 5/5 | 5/5 | 5/5 |
| Example 2 | Good | 4/4 | 4/4 | 5/4 | 5/3 |
| Example 3 | Good | 5/5 | 5/4 | 5/4 | 5/5 |
| Com. Example 1 | - | 1/1 | 1/1 | 1/1 | 1/1 |
| Com. Example 2 | Poor | 2/1 | 3/1 | 3/2 | 2/2 |
| Com. Example 3 | Poor | 2/1 | 2/1 | 2/2 | 2/2 |
| Com. Example 4 | Good | 2/2 | 2/2 | 2/2 | 2/3 |

**[Table 2]**

| Evaluation of Solubility and Results of Soil Resistance Test | | | | | | |
|---|---|---|---|---|---|---|
| | Solubility Test | | Soil Resistance Test (granite / limestone) | | | |
| | Low temperature | Diluted | Olive oil | Waste oil | Red wine | Coffee |
| Example 4 | Good | Good | 5/5 | 5/4 | 5/3 | 5/4 |
| Example 5 | Good | Good | 5/5 | 5/5 | 5/4 | 5/5 |
| Example 6 | Good | Good | 4/4 | 4/4 | 5/4 | 5/5 |
| Example 7 | Good | Good | 5/4 | 5/4 | 4/3 | 5/4 |
| Com. Example 5 | Poor | Good | 2/1 | 3/1 | 3/2 | 2/2 |
| Com. Example 6 | Poor | Poor | 2/1 | 2/1 | 2/2 | 2/2 |

## Claims

1. A fluorine-containing polymer (1) comprising:
(A) repeating units derived from a fluorine-containing acrylate monomer of the formula:
Rf-Y-O-C(=O)-CX=CH₂
wherein
X is H, methyl, F, Cl, Br, I, CFX¹X² (in which X¹ and X² are each H, F, Cl, Br or I), cyano, linear or branched C₁₋₂₁-fluoroalkyl, or optionally substituted benzyl or phenyl;
Y is a direct bond, a C₁₋₁₀-aliphatic group optionally having an oxygen atom, a C₆₋₁₀-aromatic, -cycloaliphatic or -araliphatic group optionally having an oxygen atom, -CH₂CH₂N(R¹)SO₂- (in which R¹ is C₁₋₄-alkyl) or -CH₂CH(OY¹)CH₂- (in which Y¹ is H or acetyl); and
Rf is linear or branched C₁₋₇-fluoroalkyl, C₂₋₇-fluoroalkenyl, or a fluoroether group having a total of 1-200 repeating units selected from -C₃F₆O- , -C₂F₄O- and -CF₂O- ; and
(B) repeating units derived from at least one fluorine-free acrylate monomer (B1) having a cyclic hydrocarbon group.

2. The polymer (1) of claim 1, wherein Rf is C₂₋₆-fluoro alkyl or C₃₋₆-fluoroalkenyl.

3. The polymer (1) of claim 2, wherein Rf is C₆-fluoroalkyl.

4. The polymer (1) of any of claims 1-3, wherein monomer (B1) is a (meth)acrylate having a cyclic hydrocarbon group selected from a monocyclic, a polycyclic and a bridged ring group.

5. The polymer (1) of claim 4, wherein monomer (B1) is a (meth)acrylate having a cyclic hydrocarbon group which comprises a bridged ring group.

6. The polymer (1) of any of claims 1-5, which further comprises repeating units derived from (C) a monomer having silane group.

7. The polymer (1) of any of claims 1-6, wherein the amount of units derived from monomer (B) is 1-300 parts by weight (pbw), and the amount of units derived from monomer (C) is 0-20 pbw, based on 100 pbw of units derived from monomer (A).

8. A treatment agent for masonry comprising the polymer (1) of any of claims 1-7, and a liquid medium (2).

9. The treatment agent of claim 8, wherein the liquid medium (2) is an organic solvent.

10. The treatment agent of claim 8 or 9, which is a solution.

11. The treatment agent of any of claims 8-10, which further comprises a silicon-containing compound (3).

12. A method comprising treating masonry with the treatment agent of any of claims 8-11.

13. The method of claim 12, which comprises applying the treatment agent to the masonry and then removing the liquid medium.

14. Masonry produced by the method of claim 12 or 13.

## Patentansprüche

1. Fluorhaltiges Polymer (1), umfassend:
(A) Wiederholungseinheiten, die von einem fluorhaltigen Acrylatmonomer der Formel:
Rf-Y-O-C(=O)-CX=CH₂
abgeleitet sind, worin
X H, Methyl, F, Cl, Br, I, CFX¹X² (worin X¹ und X² jeweils H, F, Cl, Br oder I sind), Cyano, geradkettiges oder verzweigtes C₁₋₂₁-Fluoralkyl oder gegebenenfalls substituiertes Benzyl oder Phenyl ist;
Y eine direkte Bindung, eine aliphatische C₁₋₁₀-Gruppe, die gegebenenfalls ein Sauerstoffatom aufweist, eine aromatische, cycloaliphatische oder araliphatische C₆₋₁₀-Gruppe, die gegebenenfalls ein Sauerstoffatom aufweist, -CH₂CH₂N(R¹)SO₂- (worin R¹ C₁₋₄-Alkyl ist) oder -CH₂CH(OY¹)CH₂- (worin Y¹ H oder Acetyl ist) ist; und
Rf geradkettiges oder verzweigtes C₁₋₇-Fluoralkyl, C₂₋₇-Fluoralkenyl oder eine Fluorethergruppe mit insgesamt 1 bis 200 Wiederholungseinheiten, ausgewählt aus -C₃F₆O-, -C₂F₄O- und -CF₂O-, ist; und
(B) Wiederholungseinheiten, die von einem fluorfreien Acrylatmonomer (B1) mit einer cyclischen Kohlenwasserstoffgruppe abgeleitet sind.

2. Polymer (1) gemäss Anspruch 1, worin Rf C₂₋₆-Fluoralkyl oder C₃₋₆-Fluoralkenyl ist.

3. Polymer (1) gemäss Anspruch 2, worin Rf C₆-Fluoralkyl ist.

4. Polymer (1) gemäss einem der Ansprüche 1 bis 3, wobei das Monomer (B1) ein (Meth)acrylat mit einer cyclischen Kohlenwasserstoffgruppe, ausgewählt aus einer monocyclischen, einer polycyclischen und einer überbrückten Ringgruppe, ist.

5. Polymer (1) gemäss Anspruch 4, wobei das Monomer (B1) ein (Meth)acrylat mit einer cyclischen Kohlenwasserstoffgruppe, die eine überbrückte Ringgruppe umfasst, ist.

6. Polymer (1) gemäss einem der Ansprüche 1 bis 5, das ferner Wiederholungseinheiten umfasst, die (C) von einem Monomer mit einer Silangruppe abgeleitet sind.

7. Polymer (1) gemäss einem der Ansprüche 1 bis 6, wobei die Menge an Einheiten, die von Monomer (B) abgeleitet sind, 1 bis 300 Gew.-Teile und die Menge an Einheiten, die von Monomer (C) abgleitet sind, 0 bis 20 Gew.-Teile, bezogen auf 100 Gew.-Teile der von Monomer (A) abgeleiteten Einheiten, beträgt.

8. Behandlungsmittel für ein Mauerwerk, umfassend das Polymer (1) gemäss einem der Ansprüche 1 bis 7 und ein flüssiges Medium (2).

9. Behandlungsmittel gemäss Anspruch 8, wobei das flüssige Medium ein organisches Lösungsmittel ist.

10. Behandlungsmittel gemäss Anspruch 8 oder 9, das eine Lösung ist.

11. Behandlungsmittel gemäss einem der Ansprüche 8 bis 10, das ferner eine siliciumhaltige Verbindung (3) umfasst.

12. Verfahren, umfassend die Behandlung eines Mauerwerks mit einem Behandlungsmittel gemäss einem der Ansprüche 8 bis 11.

13. Verfahren gemäss Anspruch 12, das das Aufbringen des Behandlungsmittels auf das Mauerwerk und dann Entfernen des flüssigen Mediums umfasst.

14. Mauerwerk, hergestellt nach dem Verfahren gemäss Anspruch 12 oder 13.

## Revendications

1. Polymère contenant du fluor (1) comprenant :
(A) des motifs de répétition dérivés d'un monomère acrylate contenant du fluor de la formule :
Rf-Y-O-C(=O)-CX=CH₂
dans laquelle
X est un H, méthyle, F, Cl, Br, I, CFX¹X² (dans lequel X¹ et X² sont chacun un H, F, Cl, Br ou I), cyano, fluoroalkyle en C₁₋₂₁ linéaire ou ramifié, ou benzyle ou phényle éventuellement substitué ;
Y est une liaison directe, un groupe aliphatique en C₁₁₀ ayant éventuellement un atome d'oxygène, un groupe aromatique, cycloaliphatique ou araliphatique en C₆₋₁₀ ayant éventuellement un atome d'oxygène, - CH₂CH₂N(R¹)SO₂- (dans lequel R¹ est un alkyle en C₁₋₄) ou -CH₂CH(OY¹)CH₂- (dans lequel Y¹ est un H ou un acétyle) ; et
Rf est un fluoroalkyle en C₁₋₇ linéaire ou ramifié, fluoroalcényle en C₂₋₇, ou un groupe fluoroéther ayant un total de 1 à 200 motifs de répétition choisis parmi -C₃F₆O-, -C₂F₄O- et -CF₂O- ; et
(B) des motifs de répétition dérivés d'au moins un monomère acrylate exempt de fluor (B1) ayant un groupe hydrocarboné cyclique.

2. Polymère (1) selon la revendication 1, dans lequel Rf est un fluoroalkyle en C₂₋₆ ou un fluoroalcényle en C₃₋₆.

3. Polymère (1) selon la revendication 2, dans lequel Rf est un fluoroalkyle en C₆.

4. Polymère (1) selon l'une quelconque des revendications 1 à 3, dans lequel le monomère (B1) est un (méth)acrylate ayant un groupe hydrocarboné cyclique choisi parmi un groupe monocyclique, un groupe polycyclique et un groupe de cycle ponté.

5. Polymère (1) selon la revendication 4, dans lequel le monomère (B1) est un (méth)acrylate ayant un groupe hydrocarboné cyclique qui comprend un groupe de cycle ponté.

6. Polymère (1) selon l'une quelconque des revendications 1 à 5, qui comprend en outre des motifs de répétition dérivés de (C) un monomère ayant un groupe silane.

7. Polymère (1) selon l'une quelconque des revendications 1 à 6, dans lequel la quantité de motifs dérivés du monomère (B) est de 1 à 300 parties en poids (pp), et la quantité de motifs dérivés du monomère (C) est de 0 à 20 pp, sur la base de 100 pp de motifs dérivés du monomère (A).

8. Agent de traitement pour la maçonnerie comprenant le polymère (1) selon l'une quelconque des revendications 1 à 7, et un milieu liquide (2).

9. Agent de traitement selon la revendication 8, dans lequel le milieu liquide (2) est un solvant organique.

10. Agent de traitement selon la revendication 8 ou 9, qui est une solution.

11. Agent de traitement selon l'une quelconque des revendications 8 à 10, qui comprend en outre un composé contenant du silicium (3).

12. Procédé comprenant le traitement de la maçonnerie avec l'agent de traitement selon l'une quelconque des revendications 8 à 11.

13. Procédé selon la revendication 12, qui comprend l'application de l'agent de traitement de la maçonnerie et ensuite l'élimination du milieu liquide.

14. Maçonnerie produite par le procédé selon la revendication 12 ou 13.
